(19) **Europäisches Patentamt**
**European Patent Office**
**Office européen des brevets**

(11) **EP 4 737 196 A1**

(12) **EUROPEAN PATENT APPLICATION**

(43) Date of publication:
**06.05.2026 Bulletin 2026/19**

(21) Application number: **24209698.0**

(22) Date of filing: **30.10.2024**

(51) International Patent Classification (IPC):
**B60L 53/62** (2019.01)          **B60L 53/66** (2019.01)
**B60L 58/12** (2019.01)

(52) Cooperative Patent Classification (CPC):
**B60L 53/62; B60L 53/665; B60L 58/12;**
B60L 2240/80; B60L 2260/44; B60L 2260/46

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **SAP SE**
**69190 Walldorf (DE)**

(72) Inventor: **SCHERT, Kelaja**
**69190 Walldorf (DE)**

(74) Representative: **Müller-Boré & Partner**
**Patentanwälte PartG mbB**
**Friedenheimer Brücke 21**
**80639 München (DE)**

Remarks:
Amended claims in accordance with Rule 137(2)
EPC.

(54) **ENERGY CONTROL FOR A CHARGING INFRASTRUCTURE FOR ELECTRIC VEHICLES**

(57)    Summarizing the invention, a computer-implemented method is provided. The computer-implemented method comprises: obtaining a first dataset comprising first charging transaction records relative to a plurality of charging transactions of first electric vehicles that have been charged at one or more charging stations of a charging infrastructure, wherein each first charging transaction record of the first dataset comprises: an initial state of charge of a battery of a respective first electric vehicle, the initial state of charge being recorded at the start of a respective charging transaction of the respective first electric vehicle, and a final state of charge of the battery of the respective first electric vehicle, the final state of charge being recorded at the end of the respective charging transaction of the respective first electric vehicle; - obtaining a second dataset comprising second charging transaction records relative to a plurality of charging transactions of second electric vehicles that have been charged at the one or more charging stations of the charging infrastructure, wherein each second charging transaction record of the second dataset comprises: an initial timestamp indicating the start of a respective charging transaction of a respective second electric vehicle, a final timestamp indicating the end of the respective charging transaction of the respective second electric vehicle, and a total energy provided to a battery of the respective second electric vehicle during the charging transaction; using the first dataset and the second dataset to generate a third dataset relative to the plurality of charging transactions of the second electric vehicles, wherein, for each charging transaction of a respective second electric vehicle, the third dataset comprises at least one of: an estimated used capacity of the battery of the respective second electric vehicle as a function of time for a time interval between the initial timestamp and the final timestamp, and an estimated free capacity of the battery of the respective second electric vehicle as a function of time for a time interval between the initial timestamp and the final timestamp; using the second dataset and the third dataset to predict a number of electric vehicles charging at a given timepoint at the one or more charging stations of the charging infrastructure.

**EP 4 737 196 A1**

**Description**

The technical field of the present application relates to battery electric vehicles and relative charging infrastructures.

According to a first aspect, a computer-implemented method is provided. The method comprises:

- obtaining a first dataset comprising first charging transaction records relative to a plurality of charging transactions of first electric vehicles that have been charged at one or more charging stations of a charging infrastructure, wherein each first charging transaction record of the first dataset comprises:

  -- an initial state of charge of a battery of a respective first electric vehicle, the initial state of charge being recorded at the start of a respective charging transaction of the respective first electric vehicle, and
  -- a final state of charge of the battery of the respective first electric vehicle, the final state of charge being recorded at the end of the respective charging transaction of the respective first electric vehicle;

- obtaining a second dataset comprising second charging transaction records relative to a plurality of charging transactions of second electric vehicles that have been charged at the one or more charging stations of the charging infrastructure, wherein each second charging transaction record of the second dataset comprises:

  -- an initial timestamp indicating the start of a respective charging transaction of a respective second electric vehicle,
  -- a final timestamp indicating the end of the respective charging transaction of the respective second electric vehicle, and
  -- a total energy provided to a battery of the respective second electric vehicle during the charging transaction;

- using the first dataset and the second dataset to generate a third dataset relative to the plurality of charging transactions of the second electric vehicles, wherein, for each charging transaction of a respective second electric vehicle, the third dataset comprises at least one of:

  -- an estimated used capacity of the battery of the respective second electric vehicle as a function of time for a time interval between the initial timestamp and the final timestamp, and
  -- an estimated free capacity of the battery of the respective second electric vehicle as a function of time for a time interval between the initial timestamp and the final timestamp;

- using the second dataset and the third dataset to predict a number of electric vehicles charging at a given timepoint at the one or more charging stations of the charging infrastructure.

According to the present disclosure, the computer-implemented method may be carried out by at least one computing device, wherein a computing device may comprise at least one processor. It may further comprise at least one memory or be in communication with at least one memory. A computing device may also comprise one or more input/output units.

In the present disclosure, "obtaining a (first/second) dataset" may comprise retrieving the dataset e.g. from the at least one memory of the computing device that carries out the step of obtaining the dataset, from the memory of another computing device, or from another remote data storage (a database, a secondary memory, a cloud storage or the like).

Both the first and second datasets comprise charging transactions records. Generally, a charging transaction record comprises data that have been collected in connection with (e.g. during) a charging transaction or charging activity of an electric vehicle. Thus, there may be a one-to-one relation between a charging transaction record and a charging transaction. An electric vehicle is a vehicle propelled by an electric motor; in particular, an electric vehicle may be a battery electric vehicle, i.e. the electric vehicle may comprise a rechargeable battery configured to store energy, which is used to power the electric motor.

A charging transaction indicates a charging process in which energy is received by the battery of the electric vehicle. In particular, the charging transaction of the electric vehicle occurs at a charging station of a charging infrastructure. A charging station comprises a device configured to provide electric energy to a rechargeable battery and may further comprise a cable configured to connect said device to the electric vehicle. A charging station may also be referred to as "electric vehicle supply equipment".

A charging infrastructure comprises one or more charging stations, in particular a plurality of charging stations. Exemplarily, the charging infrastructure may comprise charging stations within a delimited area. The charging stations of a charging infrastructure may be controlled collectively e.g. by a control module. Alternatively, the charging infrastructure may be distributed and may comprise a plurality of geographically distributed charging stations collectively controlled, e.g., by a control module.

The start of a charging transaction, namely the activation of the charging process, is the moment in which energy starts being supplied to the battery. The charging transaction may begin e.g. in response to a starting action such as the connection of the electric vehicle to the charging station or the manipulation of an actuator (e.g. a button or lever) or performing a payment.

The end of a charging transaction, namely the halting of the charging process, is the moment in which energy stops being supplied to the battery. In some examples, there may be pauses during the charging transaction in which no energy is supplied to the battery for short intervals of time. Accordingly, the end of the charging transaction may be determined as the last timepoint at which energy was supplied before a time interval during which energy was not supplied to the battery, the time interval being longer than a given threshold, e.g. 60 seconds. The charging transaction may end e.g. in response to an ending action such as the disconnection of the electric vehicle from the charging station or the manipulation of an actuator (e.g. a button or lever) or reaching a predetermined charge level.

While an electric vehicle is connected to a charging station, in particular during the charging transaction, various data may be transmitted by the electric vehicle to a data-collecting device, e.g. a computing device. The data may be transmitted by the vehicles and/or by the charging stations to which the vehicles are connected. These data may be stored in the charging transaction records.

Different electric vehicles may differ in whether they transmit or not data about the charging transactions. Accordingly, the first charging transaction records, which are relative to the plurality of first electric vehicles, may comprise different pieces of data than the second charging transaction records, which are relative to the plurality of second electric vehicles.

In particular, the first charging transaction records are relative to charging transactions of the first electric vehicles. Each first charging transaction record comprises data about a respective charging transaction of a first electric vehicle. For each first electric vehicle, one or more charging transaction records may have been stored; indeed, in the case of multiple charging transactions performed for a given first electric vehicle, corresponding multiple first charging transaction records may be comprised in the first dataset.

Each first charging transaction record comprises an initial state of charge and a final state of charge of the battery of the respective first electric vehicle whose charging transaction the record relates to. The state of charge of a battery is a time-dependent quantity that indicates the amount of energy stored in the battery at a given timepoint. The state of charge may be particularly expressed as a percentage of the maximum energy that the battery can store, i.e. it may be a pure number between 0% and 100% (endpoints included). The initial state of charge is detected at the start of the charging transaction of the first electric vehicle, while the final state of charge is detected at the end of the charging transaction of the first electric vehicle.

The initial state of charge in a first charging transaction record for an i-th charging transaction of the plurality of charging transactions of first electric vehicles may be denoted with $SoC_{\mathrm{start}}^{i}$. Similarly, the corresponding final state of charge may be denoted with $SoC_{\mathrm{stop}}^{i}$. Accordingly, considering N charging transactions of the first electric vehicles, the first dataset comprises pairs $\left\{ SoC_{\mathrm{start}}^{i}, SoC_{\mathrm{stop}}^{i} \right\}$, with i = 1, ...,N.

The second charging transaction records are relative to charging transactions of the second electric vehicles. The second electric vehicles may be different from the first electric vehicles in that they may not transmit data e.g. to the data-collecting device. The data in the second charging transaction records may be transmitted, instead, by the charging stations to which the vehicles are connected. Thus, the information content of the second charging transaction records is at least partially different from the information content of the first charging transaction records. In particular, the second charging transaction records may not comprise data indicating a state of charge, e.g. an initial state of charge and a final state of charge as discussed above for the first charging transaction records. The number of second charging transaction records may be greater than the number of first charging transaction records, e.g. by a factor of 3 or more.

Each second charging transaction record comprises data about a respective charging transaction of a second electric vehicle. For each second electric vehicle, one or more charging transaction records may have been stored; indeed, in the case of multiple charging transactions performed for a given second electric vehicle, corresponding multiple second charging transaction records may be comprised in the second dataset.

Each second charging transaction record comprises an initial timestamp and a final timestamp indicating, respectively, the start and the end of the charging transaction to which the record relates. A timestamp may be a sequence of characters identifying a moment in time, e.g. using the ISO standard 8601. A timestamp may indicate at least a date and time of the day, and may optionally further indicate any one of the following: day of the week, month, year, week of the year. The initial timestamp for a j-th charging transaction of a second electric vehicle may be denoted with $t_{\mathrm{start}}^{j}$, while the final timestamp may be denoted with $t^j_{\text{stop}}$.

Furthermore, each second charging transaction record comprises the total energy provided to the battery of the respective second electric vehicle during the charging transaction, namely the cumulative energy transferred in the charging transaction to the second electric vehicle by the charging station. The total energy may be expressed by a number and have units of watt-hours (Wh) or joules (J). The total energy provided to the battery of a second electric vehicle during a j-th charging transaction may be denoted as $E^j_\Delta$. Exemplarily, the total energy may be in the order of tens of kWh. Assuming that the battery was not completely empty before the charging transaction, the total energy may be only a part of the energy that is stored in the battery at the end of the charging transaction.

Accordingly, considering M charging transactions of the plurality of second electric vehicles, the second dataset comprises triplets $\left\{t^j_{\text{start}}, t^j_{\text{stop}}, E^j_\Delta\right\}$, with $j$ = 1, ..., M.

The method comprises using the first dataset and the second dataset to generate a third dataset, which is also relative to the plurality of charging transactions of the second electric vehicles, like the second dataset. Specifically, the first and second charging transaction records may be used to augment the second dataset, namely to create data that can be used to characterize the charging transactions of the second electric vehicles but that were not recorded during said charging transactions.

While the data in the first and second dataset are measured data that actually quantify the respective properties (namely state of charge, time, and energy), the data in the third dataset may be estimated data. Specifically, the third dataset comprises an estimated used and/or estimated free capacity of a battery of a second electric vehicle as a function of time for the duration of the charging transaction, i.e. for the time interval between the initial timestamp and the final timestamp. The (total) capacity of the battery is the maximum energy that can be stored by the battery. The used capacity of the battery indicates the energy stored in the battery at a given time point, while the free capacity of the battery indicates the maximum energy that the battery could still receive at the given time point. Both the used capacity and the free capacity can be less than or equal to the total capacity, and the total capacity is given by the sum of the used capacity and the free capacity. Exemplarily, the used capacity and the total capacity may be estimated from the first and second dataset and the estimate for the free capacity may be obtained as the difference between the total capacity and the used capacity. The unit for the total capacity, the free capacity and the used capacity is the Wh or J and the numerical values may be stored e.g. as floating-point numbers.

In a particular example, using the first dataset and the second dataset to generate the third dataset may comprise using a mathematical model defining the time dependence of the estimated used capacity of the battery and/or a mathematical model defining the time dependence of the estimated free capacity of the battery. The mathematical model(s) may comprise one or more parameters whose values are settable. Accordingly, the data from the first and second dataset may be used to derive parameter values for the parameters in the mathematical model.

In a particular example, using the first dataset and the second dataset to generate the third dataset may comprise determining, for each charging transaction of the second electric vehicles, an estimated initial state of charge and an estimated final state of charge based on the initial states of charge and the final states of charge of the first charging transaction records. Indeed, since the charging transaction records of the second dataset lack the information about the state of charge, the data from the first dataset may be used to compensate this lack and supplement the second charging transaction records. Accordingly, the charging behavior of the first electric vehicles, which is reflected in the states of charge of the first charging transaction records, may be assumed to be representative of the charging behavior of the second electric vehicles, so that the state of charge information for the second electric vehicles may be derived from the state of charge information for the first electric vehicles.

Specifically, in some examples, determining the estimated initial state of charge and the estimated final state of charge may comprises computing an average initial state of charge from the initial states of charge of the first charging transaction records and setting the estimated initial state of charge to the average initial state of charge, as well as computing an average final state of charge from the final states of charge of the first charging transaction records and setting the estimated final state of charge to the average final state of charge.

Considering $N$ charging transactions of the first electric vehicles, the first dataset comprises pairs $\left\{SoC^i_{\text{start}}, SoC^i_{\text{stop}}\right\}$, with $i$ = 1, ...,N. The average initial state of charge may be computed as $SoC_{\text{start}} = \frac{\sum_{i=1}^N SoC^i_{\text{start}}}{N}$ and the average final state of charge may be computed as $SoC_{\text{stop}} = \frac{\sum_{i=1}^N SoC^i_{\text{stop}}}{N}$. Then, considering M charging transactions of the second electric vehicles, for each charging transaction of a second vehicle, i.e. $\forall j$ = 1, ..., M, the estimated initial state of charge is set as $\widetilde{SoC}^j_{\text{start}} := SoC_{\text{start}}$ and, similarly, $\widetilde{SoC}^j_{\text{stop}} := SoC_{\text{stop}}$.

The second dataset, comprising timestamps and total energies transferred to the batteries during the charging transactions of the second electric vehicles, may, thus, be augmented by generating the third dataset, which includes also estimated states of charge for said charging transactions of the second electric vehicles. The estimated states of charge may be linked to the total energies in order to estimate total and used capacity of the battery.

Indeed, exemplarily, using the first dataset and the second dataset to generate the third dataset may further comprise, for each charging transaction of the second electric vehicles:

- computing an estimated state of charge difference $\widetilde{SoC}_\Delta^j$ between the estimated final state of charge and the estimated initial state of charge, namely $\widetilde{SoC}_\Delta^j = \widetilde{SoC}_{stop}^j - \widetilde{SoC}_{start}^j$;

- computing an estimated total capacity $\tilde{E}_{100}^j$ of the battery from the estimated state of charge difference $\widetilde{SoC}_\Delta^j$ and the total energy $E_\Delta^j$;

- computing an estimated initial used capacity $\tilde{E}_{start}^j$ of the battery at the initial timestamp from the estimated total capacity $\tilde{E}_{100}^j$ of the battery and the estimated initial state of charge $\widetilde{SoC}_{start}^j$;

- computing an estimated final used capacity $\tilde{E}_{stop}^j$ of the battery at the final timestamp from the estimated total capacity $\tilde{E}_{100}^j$ of the battery and the estimated final state of charge $\widetilde{SoC}_{stop}^j$.

In other words, by establishing a correspondence between the total energy transferred to the battery during the charging transaction and the relative estimated increase in the state of charge of the battery, properties of the battery in relation to the charging transaction may be inferred. In particular, proportion laws may be applied to derive $\tilde{E}_{100}^j$, $\tilde{E}_{start}^j$ and $\tilde{E}_{stop}^j$. Exemplarily, $\tilde{E}_{100}^j$ may be obtained using the geometrical proportion $\widetilde{SoC}_\Delta^j : 100\% = E_\Delta^j : \tilde{E}_{100}^j$ so that $\tilde{E}_{100}^j = \frac{E_\Delta^j \cdot 100\%}{\widetilde{SoC}_\Delta^j}$. It should be noted that $\widetilde{SoC}_\Delta^j = \widetilde{SoC}_\Delta = SoC_{stop} - SoC_{start} \,\forall j = 1, \dots, M$.

Similar geometrical proportions may be established for the initial used capacity of the battery and the final used capacity of the battery, which may, thus, be obtained as $\tilde{E}_{start}^j = \frac{\tilde{E}_{100}^j \cdot \widetilde{SoC}_{start}^j}{100\%}$ and $\tilde{E}_{stop}^j = \frac{\tilde{E}_{100}^j \cdot \widetilde{SoC}_{stop}^j}{100\%}$, respectively. The corresponding free capacities at the initial and final timestamp may be obtained as $\tilde{E}_{100}^j - \tilde{E}_{start}^j$ and $\tilde{E}_{100}^j - \tilde{E}_{stop}^j$.

The initial used capacity of the battery and the final used capacity of the battery may be used together with a mathematical model defining the time dependence of the estimated used capacity of the battery to obtain the estimated used capacity as a function of time for the duration of the charging transaction of a battery of a second electric vehicle. In particular, $\tilde{E}_{start}^j$ and $\tilde{E}_{stop}^j$ may constitute boundary conditions and the mathematical model may define how the estimated used capacity varies from $\tilde{E}_{start}^j$ to $\tilde{E}_{stop}^j$.

In a particular example, the mathematical model may define a linear time dependence. In this case, considering the two data points ($t_{start}^j, \tilde{E}_{start}^j$), ($t_{stop}^j, \tilde{E}_{stop}^j$), the estimated used capacity may be $\tilde{E}^j(t) = \frac{\tilde{E}_{stop}^j - \tilde{E}_{start}^j}{t_{stop}^j - t_{start}^j} \left( t - t_{start}^j \right) \cdot \frac{\tilde{E}_{stop}^j - \tilde{E}_{start}^j}{t_{stop}^j - t_{start}^j} + \tilde{E}_{start}^j$, for $t \in [t_{start}^j, t_{stop}^j]$. For $t \notin [t_{start}^j, t_{stop}^j]$, i.e. when the second vehicle is not connected to a charging station, the function $\tilde{E}^j(t)$ is not actually defined and may be set to zero to facilitate some computations based on the estimated used capacity, as discussed below. The estimated free capacity may be $\tilde{F}^j(t) = \tilde{E}_{100}^j - \tilde{E}^j(t)$ for $t \in [t_{start}^j, t_{stop}^j]$. For $t \notin [t_{start}^j, t_{stop}^j]$, i.e. when the second vehicle is not connected to a charging station, the function $\tilde{F}^j(t)$ is not actually defined and may be set to zero. In other examples, other models for the time dependence may be used. The third dataset may comprise $\tilde{E}^j(t)$ and/or $\tilde{F}^j(t)$ $\forall j = 1, ..., M$.

After generating the third dataset, the method comprises using the second dataset and the third dataset to predict a number of electric vehicles charging at a given timepoint at the one or more charging stations of the charging infrastructure. In other words, a number of concurrent charging transactions at the given timepoint is predicted.

Accordingly, the second and third datasets, which contain data pertaining to past charging transactions, are used to make a prediction about future charging transactions, in particular about a number of electric vehicles concurrently charging at a given timepoint and/or over a given time interval at the one or more charging stations of the charging infrastructure. The prediction of the number of electric vehicles charging at the charging infrastructure is derived from measurements of physical properties as included in the first and second datasets (from which the third datasets is derived), including energy, capacity and state of charge.

The use of the third dataset, which augments the second dataset, has the advantage of improving the prediction with respect to a case in which only the second dataset may be used. Furthermore, if the number of second charging transaction records is greater than the number of first charging transaction records, using the combination of second and third datasets (instead of, e.g. using solely the first dataset) also leads to a more accurate prediction.

In a particular example, using the second dataset and the third dataset to predict the (future) number of electric vehicles may comprise aggregating at least some data from the second and third datasets. Specifically, it may comprise computing, from the second dataset, a past number of second electric vehicles charging at the one or more charging stations of the charging infrastructure as a function of time over a predetermined time interval; and computing, from the third dataset, a cumulative estimated used capacity as a function of time over the predetermined time interval and/or a cumulative estimated free capacity as a function of time over the predetermined time interval.

The past number of vehicles may be determined based on the timestamps of the second dataset. Indeed, considering a timepoint $t_x$, the number of second vehicles charging at that timepoint $t_x$ corresponds to the number of intervals $\left[t^j_{\text{start}}, t^j_{\text{stop}}\right]$ such that $t_x \in \left[t^j_{\text{start}}, t^j_{\text{stop}}\right]$ for $j = 1, ..., M$. By computing this number at various timepoints, a function expressing the past number of vehicles vs time may be obtained.

The cumulative estimated used capacity indicates the overall energy contained in a fleet of electric vehicles charging at the charging infrastructure. The cumulative estimated used capacity $\tilde{E}(t)$ may be given by $\tilde{E}(t) = \sum_{j=1}^{M} \tilde{E}^j(t)$ for $t \in [t^{j,min}_{\text{start}}, t^{j,max}_{\text{stop}}]$, with $t^{j,min}_{\text{start}} = \min_{j=1,...,M} t^j_{\text{start}}$ and $t^{j,max}_{\text{stop}} = \max_{j=1,...,M} t^j_{\text{stop}}$. Similarly, the cumulative estimated free capacity $\tilde{F}(t)$ may be given by $\tilde{F}(t) = \sum_{j=1}^{M} \tilde{F}^j(t)$ for $t \in [t^{j,min}_{\text{start}}, t^{j,max}_{\text{stop}}]$, with $t^{j,min}_{\text{start}} = \min_{j=1,...,M} t^j_{\text{start}}$ and $t^{j,max}_{\text{stop}} = \max_{j=1,...,M} t^j_{\text{stop}}$.

In some examples, the past number of vehicles, the cumulative estimated used capacity and the cumulative estimated free capacity may be discrete functions, and, thus, may represent time-series data. In other examples, at least one of the past number of vehicles, the cumulative estimated used capacity and the cumulative estimated free capacity may be continuous and may be discretized to create time-series-data. Specifically, the method may comprise selecting a time interval (also referred to as "bucket size"), such as one hour, and aggregating the data in respectively interval-based records (e.g. hourly records). If, for instance, the second dataset spans a range of one week, $\tilde{E}(t)$ may be defined for each hour of each day of said week.

In a particular example, using the second dataset and the third dataset to predict the number of electric vehicles may comprise applying a machine-learning model. Accordingly, data from and/or derived from the second dataset and the third dataset may be provided as input to the machine-learning model and the output of the machine-learning model may be the (future) number of charging electric vehicles at the given timepoint.

In a further particular example, using the second dataset and the third dataset to predict the number of electric vehicles may comprise providing the past number for the given timepoint and at least one of the cumulative estimated used capacity and the cumulative estimated free capacity for the given timepoint as input to the machine-learning model. Exemplarily, both the cumulative estimated used capacity and the cumulative estimated free capacity may be provided as input. Furthermore, also the given timepoint may be provided as input to the machine-learning model.

A machine-learning model (MLM) is a mathematical model for performing a task, which is not explicitly programmed to perform its task. Rather, an MLM automatically learns and improves from data during the training process. An MLM includes parameters whose values are determined during the training process. Instead, hyper-parameters are settings for the architecture and the learning process of an MLM, which are usually determined before training.

Examples of MLMs include, but are not limited to, artificial neural networks (ANNs), decision trees, support vector machines (SVMs), random forests, and gradient boosting machines (GBMs), among others. For instance, the MLM may be a gradient boosting machine such as XGBoost.

The MLM used to generate the prediction may have been trained with datasets corresponding to the second and third datasets, i.e. with datasets comprising not only past numbers of charging electric vehicles but also estimated used and free capacities.

In a particular example, each first charging transaction record of the first dataset may further comprise:

-- an initial timestamp indicating the start of a respective charging transaction of a respective first electric vehicle,
-- a final timestamp indicating the end of the respective charging transaction of the respective first electric vehicle, and
-- a total energy provided to a battery of the respective first electric vehicle during the charging transaction.

From the data in the first dataset, a used capacity of the battery of the respective first electric vehicle as a function of time for a time interval between the initial timestamp and the final timestamp, and a free capacity of the battery of the respective first electric vehicle as a function of time for a time interval between the initial timestamp and the final timestamp can be computed, similarly to how the estimated quantities discussed above were computed. The difference is that for the first electric vehicles the used and free capacity are not just estimates, since the state of charge is known and needs not be assumed.

In this case, also the first dataset may be used, besides the second and third datasets, to predict the future number of charging electric vehicles.

In a particular example, the method may further comprise using the predicted number of electric vehicles to determine a threshold quantity of energy to be supplied to the charging infrastructure, and causing at least the threshold quantity of energy to be supplied the charging infrastructure.

If Z is the predicted number of electric vehicles charging at a given timepoint, the threshold quantity of energy $E_G$ that may be taken from the fleet of electric vehicles may be proportional to Z. Exemplarily, the threshold quantity of energy may be given by the product of the predicted number of electric vehicles and a minimum energy $E_{veh}$, i.e. $E_G = Z \cdot E_{veh}$ wherein $E_{veh}$ may be determined based on the product of $SoC_{start}$ and an average battery total capacity A, which may be 50 kWh, e.g. $E_{veh} = 0.1 * SoC_{start} * A$. For instance, $E_{veh}$ may be equal to 2 kWh.

Causing at least the threshold quantity of energy to be supplied the charging infrastructure, may comprise instructing, by a computing device that has obtained the predicted number of vehicles, the charging stations to withdraw energy from the batteries of the electric vehicles or instructing the electric vehicles to provide the energy from their batteries to the charging stations. In other cases, the computing device that has obtained the predicted number of vehicles may be in communication with a second computing device and said second computing device may be configured to control the charging stations and/or the electric vehicles.

Thus, once the given timepoint arrives, $E_G$ may be supplied back to the charging infrastructure and, from there, e.g. to the grid. Indeed, the charged energy provided to a battery of an electric vehicle may be momentarily pushed back to the grid. The energy stored in the electric vehicles may be used to facilitate ancillary services such as loadbalancing and frequency control, and, more generally, to balance variations in energy production and consumption, thus avoiding grid congestion. In particular, the one or more charging stations of the charging infrastructure may be V2X charging stations, such as V2G charging stations. Determining $E_G$ based on the predicted number Z enables planning for the ancillary services and, thus, ensures that problems in the grid can be minimized and/or prevented.

In a further particular example, supplying at least the threshold quantity of energy to the charging infrastructure may be conditional on the given timepoint for which the prediction is made. In other words, the method may comprise causing at least the threshold quantity of energy to be supplied to the charging infrastructure if the given timepoint lies in a predetermined time interval. For instance, the predetermined time interval may correspond to the peak demand time for the grid.

In a particular example, the method may further comprise using the predicted number of electric vehicles to control a quantity of energy provided by each charging station of the charging infrastructure. Indeed, the amount of energy provided by a charging station may have to be different depending on how many electric vehicles are connected to the charging infrastructure. Using the predicted number may ensure that the quantity of energy is controlled to be at the right amount from the onset. Exemplarily, the quantity of energy provided by each charging station may be controlled such that one or more constraints are satisfied, e.g. constraints ensuring a correct charging and/or the occurrence of errors/damages.

For example, a location at which the charging infrastructure is located may have a maximum energy availability *MEA* and each charging station may have a maximum energy output *MEO*, and the charging stations may operate at the maximum energy output only as long as their total output does not exceed the maximum energy availability. If, for example, *MEO > MEA/3,* the charging stations may operate at *MEO* only if one or two vehicles are connected to the charging infrastructure.

At the given timepoint for which the number of electric vehicles has been predicted, the charging stations may be controlled (by a computing device that has obtained the predicted number of vehicles or another computing device in communication with the computing device that has obtained the predicted number of vehicles) to each provide an energy output EO such that, for h charging stations, the constraint $h \cdot EO \leq MEA$ is met.

In a further particular example, the method may further comprise detecting an actual number of electric vehicles charging at the one or more charging stations of the charging infrastructure at a later timepoint subsequent to the given timepoint; and using a difference between the predicted number of electric vehicles and the actual number of electric vehicles to adjust the quantity of energy provided by each charging station of the charging infrastructure.

In this case, while the predicted number of electric vehicles may provide a starting point for the controlling of the charging infrastructure, feedback from real-time data may be then used to adjust controlling of the energy output.

Any of the disclosed methods can be implemented in the form of one or more computer programs (e.g. computer program products), wherein the computer program products may cause one or more data processing apparatuses to perform one or more operations described in the present disclosure.

The subject matter described in the present disclosure can be implemented in a data signal or on a machine readable medium, where the medium is embodied in one or more information carriers, such as an optical storage device (e.g., CD-ROM, DVD-ROM), magnetic tape, a semiconductor memory, or a hard disk. In particular, disclosed subject matter may be tangibly embodied in a non-transitory machine (computer) readable medium, such that signals and carrier waves are excluded.

According to a second aspect, a computing system is provided. The computing system may comprise at least one processor configured to perform the method described above.

Furthermore, a system comprising said computing system and the charging infrastructure is provided. As discussed above, the charging infrastructure comprises one or more charging stations, wherein the one or more charging stations are configured to charge electric vehicles. The computing system is configured to control a quantity of energy provided by and/or to the charging infrastructure during charging transactions of the electric vehicles.

Brief Description of the Figures

Details of exemplary embodiments are set forth below with reference to the exemplary drawings. Other features will be apparent from the description, the drawings, and from the claims.

Figure 1 shows a schematic representation of an exemplary system comprising a charging infrastructure and a computing system.

Figure 2 shows a flow chart of an exemplary method for predicting a number of charging electric vehicles.

Figure 3 shows an exemplary model of a charging transaction.

Figure 4 shows exemplary plots of cumulative estimated used capacity and cumulative estimated free capacity over the course of one day.

Figure 5 shows exemplary different amounts of training data together with predictions for one week.

Figure 6 shows an enlargement of the predictions of figure 5.

Figure 7 shows an exemplary computing environment.

Detailed Description of the Figures

In the following, a detailed description of examples will be given with reference to the drawings. Various modifications to the examples may be made. Unless explicitly indicated otherwise, elements of one example may be combined and used in other examples to form new examples.

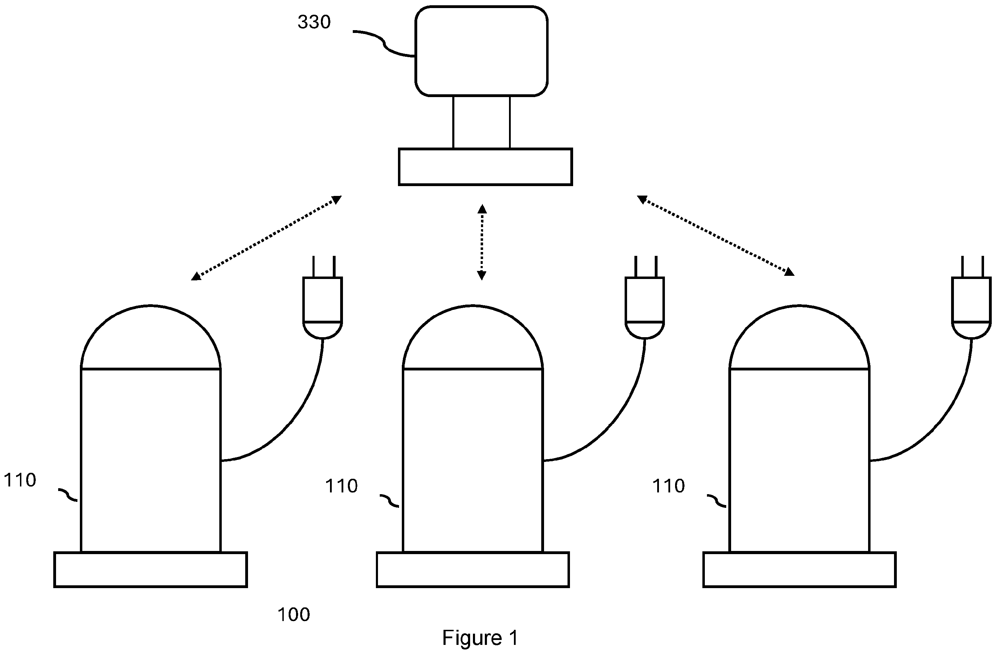

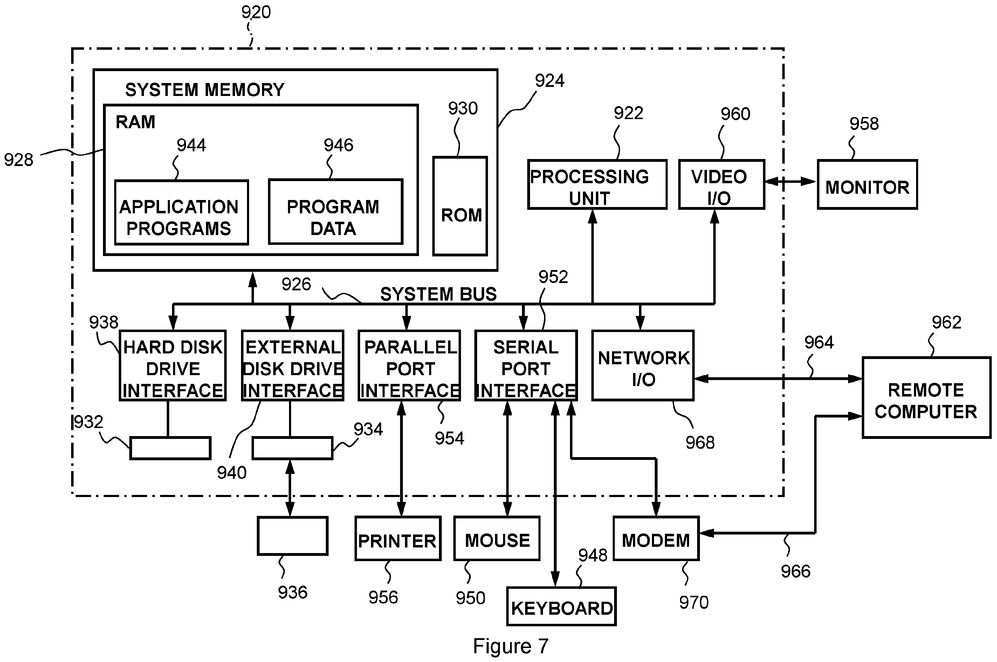

**Figure** 1 shows a schematic representation of an exemplary system comprising a computing system 330 and a charging infrastructure 100. The computing system 330 comprises at least a processor. Processors suitable for the execution of a computer program include, by way of example, both general and special purpose microprocessors, and any one or more processors of any kind of digital computer. Generally, a processor will receive instructions and data from a read only memory or a random-access memory or both. Generally, a computer will also include, or be operatively coupled to receive data from or transfer data to, or both, one or more mass storage devices for storing data, e.g., magnetic, magneto-optical disks, or optical disks. Exemplarily, the computing system 330 may be implemented as the computing environment shown in figure 7.

The charging infrastructure 100 comprises a plurality of charging stations 110, wherein each charging station 110 is configured to provide electric energy to a rechargeable battery of a battery electric vehicle. Each charging station 110 may comprise a device that supplies energy to the vehicle and a cable configured to connect the device to an electric vehicle, wherein the cable comprises a connector configured to be inserted into an inlet of an electric vehicle. Accordingly, when a charging transaction takes place, a charging station 110 is electrically connected to an electric vehicle.

Although figure 1 shows three charging stations 110, the number of charging stations may be any other number. The charging infrastructure 100 may be located at an office building, at a private residence, at a public space (such as an airport, train station), at a gas station or any other place.

The computing system 330 may control the charging infrastructure 100, e.g. it may comprise a control module for controlling the charging infrastructure 100. The computing system 330 and the charging infrastructure 100 can be interconnected by any form or medium of digital data communication, e.g., a communication network. Examples of communication networks include a local area network ("LAN") and a wide area network ("WAN"), e.g., the Internet. The computing system 330 may also be configured to communicate with any electric vehicle that charges at the charging infrastructure 100.

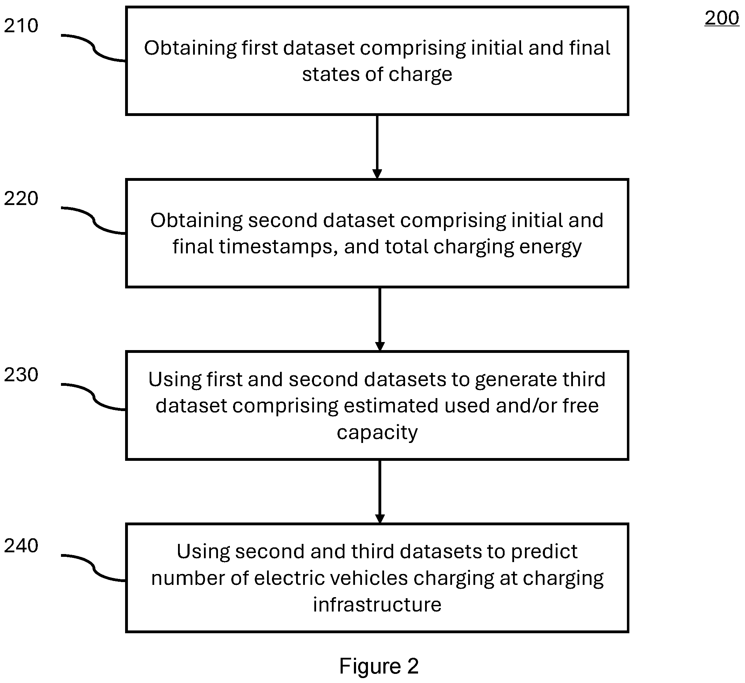

**Figure** 2 shows a flow chart of an exemplary method 200 for predicting a number of charging electric vehicles. The method 200 comprises obtaining 210 (e.g. by the computing system 330) a first dataset comprising first charging transaction records relative to a plurality of charging transactions of first electric vehicles that have been charged at the charging stations 110 of the charging infrastructure 100, wherein each first charging transaction record of the first dataset comprises: an initial state of charge of a battery of a respective first electric vehicle, the initial state of charge being recorded at the start of a respective charging transaction of the respective first electric vehicle, and a final state of charge of the battery of the respective first electric vehicle, the final state of charge being recorded at the end of the respective charging transaction of the respective first electric vehicle. In one example, the first dataset comprises 6961 first charging transaction records.

The first electric vehicles are vehicles that, while connected to a charging station 110, transmit information about the charging transaction, in particular about the state of charge of their battery, e.g. to the charging station 110 or to the computing system 330 or to another computing device. This information is collected in the first charging transaction records of the first dataset. Thus, for each charging transaction conducted by a first electric vehicle, the state of charge at the beginning of the charging transaction and the state of charge at the conclusion of the charging transaction are stored in a respective first charging transaction record. The charging transaction starts in response to the connection of the electric vehicle to the charging station 110 and ends upon reaching a predetermined charge level.

The method 200 further comprises obtaining 220 a second dataset comprising second charging transaction records relative to a plurality of charging transactions of second electric vehicles that have been charged at the plurality of charging stations 110 of the charging infrastructure 100, wherein each second charging transaction record of the second dataset comprises: an initial timestamp indicating the start of a respective charging transaction of a respective second electric vehicle, a final timestamp indicating the end of the respective charging transaction of the respective second electric vehicle, and a total energy provided to a battery of the respective second electric vehicle during the charging transaction. In one example, the second dataset comprises 30892 second charging transaction records.

The second electric vehicles are vehicles that, while connected to a charging station 110, do not transmit information about the charging transaction to any other device. Hence, the information available about their charging transaction is the information recorded by the charging station 110 to which they are connected. The charging station 110 records the timestamp of the timepoint at which the second electric vehicle is connected, the timestamp of the timepoint at which the second electric vehicle stops receiving energy from the charging station 110 and the energy that the charging station 110 has provided to the second electric vehicle in the time in between.

The method 200 further comprises using 230 the first dataset and the second dataset to generate a third dataset relative to the plurality of charging transactions of the second electric vehicles. Specifically, an average initial state of charge $SoC_{\text{start}}$ is computed as the arithmetic mean of all the initial states of charge in the first charging transaction records and an average final state of charge $SoC_{\text{stop}}$ is computed as the arithmetic mean of all the final states of charge in the first charging transaction records. Exemplarily, $SoC_{\text{start}} = 41.3\%$ and $SoC_{\text{stop}} = 83.4\%$.

It can be assumed that these average values are an approximation of the charging transactions of the second electric vehicles as well, so the data in the second charging transactions are augmented by adopting the average values extracted from the first charging transactions as estimates for the state of charge values for the charging transactions of the second electric vehicles. Considering the correspondence between the difference $\widetilde{SoC}_\Delta = SoC_{\text{stop}} - SoC_{\text{start}}$, and the energy provided by the charging station 110 that caused said increase in the state of charge, namely the total energy stored in each second charging transaction record, the total capacity of a battery relative to the j-th second charging transaction record is calculated as $\widetilde{E}_{100}^{j} = \frac{E_\Delta^j \cdot 100\%}{\widetilde{SoC}_\Delta}$. Similarly, the initial used capacity of the battery and the final used capacity of the battery, can be obtained as $\tilde{E}_{\text{start}}^{j} = \frac{\tilde{E}_{100}^{j} \cdot \widetilde{SoC}_{\text{start}}^{j}}{100\%}$ and $\tilde{E}_{\text{stop}}^{j} = \frac{\tilde{E}_{100}^{j} \cdot \widetilde{SoC}_{\text{stop}}^{j}}{100\%}$, respectively. The corresponding free capacities at the initial and final timestamp are obtained as $\tilde{E}_{100}^{j} - \tilde{E}_{\text{start}}^{j}$ and $\tilde{E}_{100}^{j} - \tilde{E}_{\text{stop}}^{j}$.

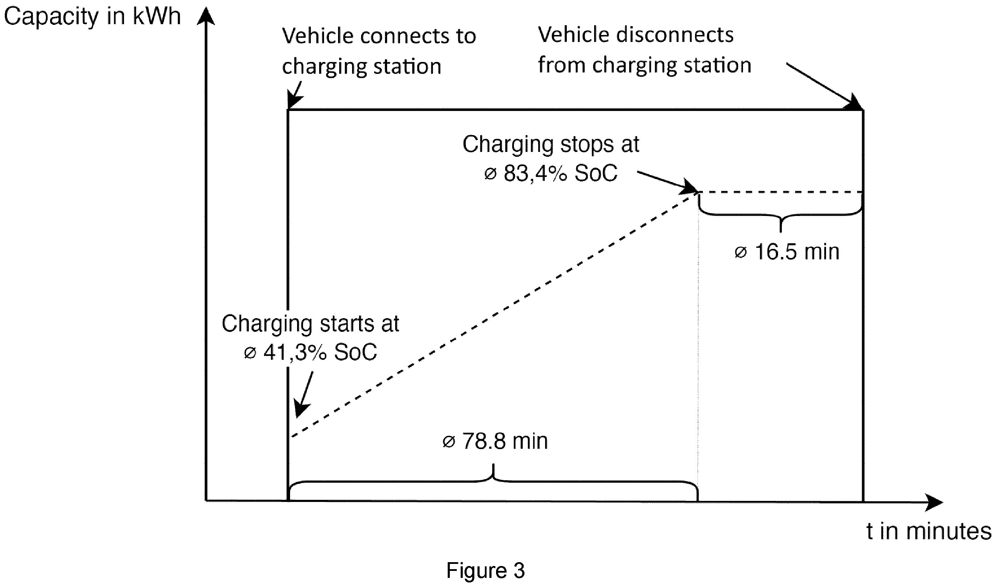

It can be further assumed as an approximation that the used capacity varies linearly from $\tilde{E}_{\text{start}}^{j}$ to $\tilde{E}_{\text{stop}}^{j}$. A linear model of an average charging transaction extracted from the first charging transaction records is shown in **figure 3**. Figure 3 is a plot of the used capacity, in units of kWh, as a function of time, in units of minutes, over the course of a charging transaction. The electric vehicles start charging by being connected to the outlet of a charging station 110, on average a charging transaction duration is 78.8 minutes until the charging stops. Furthermore, the electric vehicles spend on average additional 16.5 minutes connected to the charging station 110 before being disconnected, e.g. by the driver. The used capacity increases linearly from an initial value corresponding to $SoC_{\text{start}}$ = 41.3% to a final value corresponding to $SoC_{\text{stop}}$ = 83.4%.

On the basis of the linear time dependence assumption and of the estimated values for the used capacity at the start of the charging transaction and the used capacity at the end of the charging transaction, an estimated used capacity Ej (t) of the battery relative to the j-th second charging transaction record as a function of time for a time interval between the initial timestamp and the final timestamp can be derived $\forall j = 1, ... , M$. Similarly, the estimated free capacity $\tilde{F}j(t)$ can be obtained from $\tilde{E}_{100}^{j}$ and $\tilde{E}j(t)$. Thus, the third dataset comprises $\tilde{E}j(t)$ and $\tilde{F}j(t) \, \forall j = 1, ..., M$.

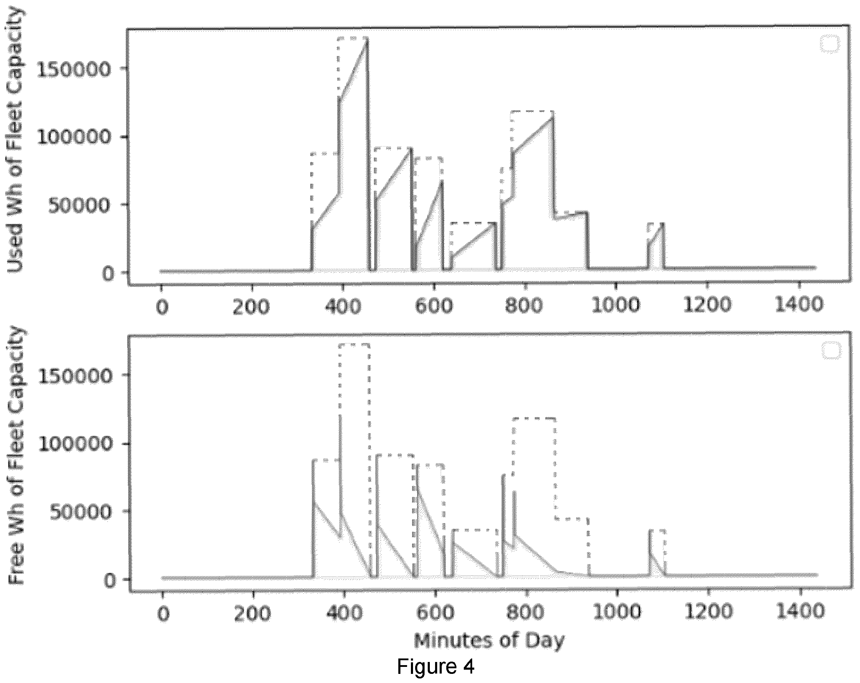

The method 200 further comprises using 240 the second dataset and the third dataset to predict a number of electric vehicles charging at a given timepoint at the one or more charging stations 110 of the charging infrastructure 100. In particular, from the third dataset, a cumulative estimated used capacity as a function of time and a cumulative estimated free capacity as a function of time are computed. **Figure 4** shows exemplary plots of cumulative estimated used capacity (upper plot, solid line) and cumulative estimated free capacity (lower plot, solid line) over the course of one day. The dashed line in both plots indicates a cumulative estimated total capacity of the batteries.

Furthermore, from the timestamps in the second dataset a past number of second electric vehicles charging at the charging stations 110 of the charging infrastructure 100 is computed as a function of time.

The cumulative estimated used capacity, the cumulative estimated free capacity and the past number of electric vehicles charging at the charging stations 110 of the charging infrastructure 100 are computed for a predetermined time interval, which may be e.g. in the order of weeks. These data may be further aggregated in buckets of one hour.

The data may be further preprocessed, e.g. by extracting and appending time-related attributes. Specifically, a function may add the following attributes to the past number of electric vehicles: "hour", which denotes the hour of the day; "dayofweek", indicating the day of the week; "quarter", representing the quarter of the year; "month", for the month; "year", specifying the calendar year; "dayofyear", which is the ordinal day within the year; "dayofmonth", indicating the day of the month; and "weekofyear", which corresponds to the ISO week number within the year. These attributes capture the inherent cyclical patterns within the dataset. They may be also fed as input to the XGBoost model described below.

The cumulative estimated used capacity, the cumulative estimated free capacity and the past number of electric vehicles are fed as input to an appropriately trained MLM, which outputs the predicted number of electric vehicles at a given timepoint at the one or more charging stations 110 of the charging infrastructure 100. The MLM may be an XGBoost model.

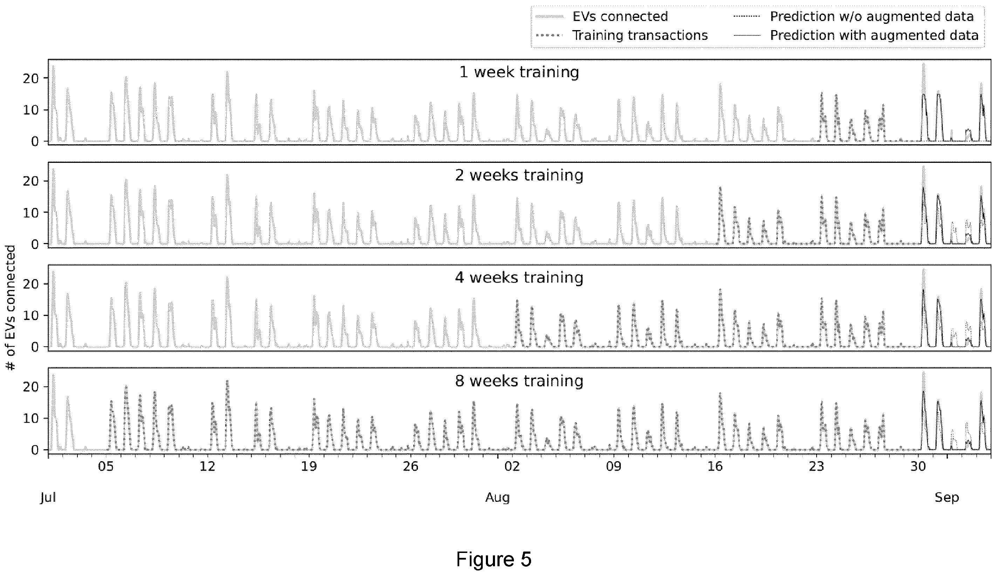

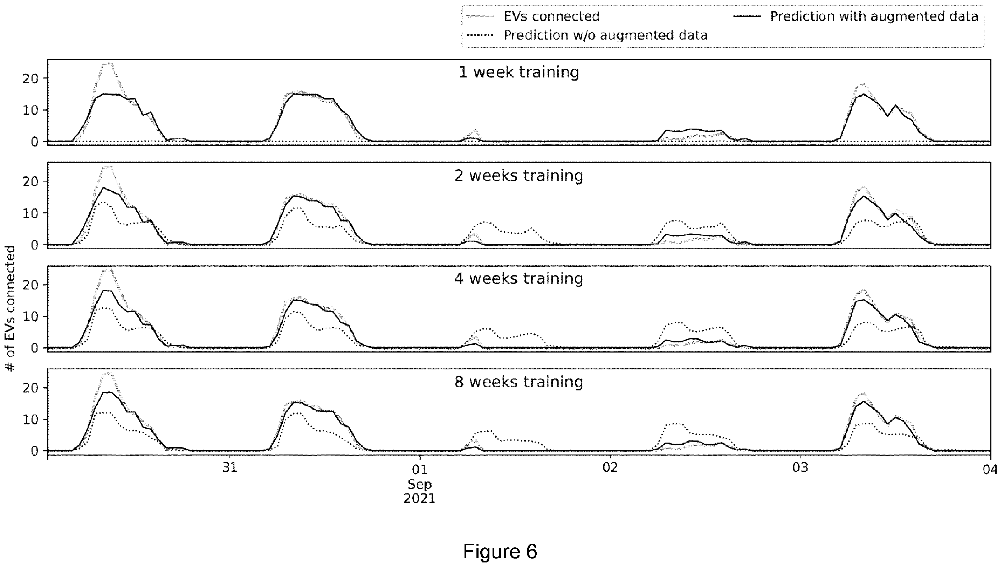

The predictions shown in **figures 5 and 6** illustrate the difference in the results when using the past number of vehicles together with the estimated used and free capacities (thin solid line) compared to just using the past number of vehicles (dotted line). The plots in figures 5 and 6 also show the differences in the predictions depending on the amount of training data, namely whether the training data (dashed line in figure 5) cover a 1-week period, a 2-week period, a 4-week period or an 8-week period. The thick solid line in all plots shows the actual number of electric vehicles charging at the charging infrastructure 100.

The plots in figures 5 and 6 are the result of using an XGBoost model configured with the following parameter settings:

· Base Score: The base score is set to 0.5, which represents the initial prediction score for all instances. This parameter serves as the initial estimate for the target variable.
· Booster: The booster parameter specifies the type of boosting algorithm to use. The "gbtree" booster is employed, indicating that gradient boosted trees are utilized as base learners.
· Number of Estimators: The parameter n_estimators determines the number of boosting rounds (decision trees) to build. The model is configured with 3000 estimators, indicating a relatively large number of boosting rounds.
· Early Stopping Rounds: The early stopping rounds parameter is used for early stopping to prevent overfitting. Training stops if the performance on the validation set does not improve after a certain number of rounds. Early stopping is triggered after 50 rounds without improvement.

· Objective: The objective parameter specifies the loss function to be minimized during model training. Here "reg:squarederror" is chosen as the objective, indicating that the model minimizes the mean squared error.

· Evaluation Metric: The eval metric parameter specifies the evaluation metric to be used during model training. The root mean square error (RMSE) is chosen as the evaluation metric, measuring the average magnitude of the errors between predicted values and actual values in a dataset. Mathematically, the RMSE is calculated by taking the square root of the average of the squared differences between predicted values and actual values.

· Maximum Depth: The max depth parameter controls the maximum depth of each decision tree in the boosting process. The maximum depth is set to 6, indicating that each tree is allowed to grow to a maximum depth of 6 levels.

· Learning Rate: The learning rate parameter controls the step size at each iteration during gradient boosting. A smaller learning rate generally results in a more conservative model. The learning rate is set to 0.01, indicating a relatively small step size.

The performance of the MLM is measured by its ability to accurately predict the future concurrent charging transactions based on the input variables that are the timestamp of the future given timepoint, the past number of connected EVs over a given time interval, the cumulative used battery capacity (in Wh), and the cumulative free battery capacity (in Wh). The performance is evaluated using the standard statistical measures: median absolute error (MAE), RMSE, and coefficient of determination (R2), which are reported in the table below.

| Data | Standard statistical measure | Number of weeks | | | |
|------|------|------|------|------|------|
| | | 8 | 4 | 2 | 1 |
| Past number of charging vehicles | RMSE | 3.664 | 3.711 | 3.714 | 6.589 |
| | R2 | 0.610 | 0.599 | 0.597 | -0.314 |
| | MAE | 2.232 | 2.213 | 2.168 | 0.716 |
| | Rounds | 471 | 360 | 469 | 50 |
| Past number of charging vehicles, cumulative used capacity, cumulative free capacity | RMSE | 1.143 | 1.291 | 1.364 | 1.633 |
| | R2 | 0.962 | 0.951 | 0.945 | 0.922 |
| | MAE | 0.521 | 0.564 | 0.624 | 3.313 |
| | Rounds | 941 | 1631 | 1368 | 1658 |

The use of the "augmented data", namely the cumulative estimated used capacity and the cumulative estimated free capacity, improves the performance of the model. Furthermore, an increasing number of weeks over which the training data span also improves the performance of the model. Indeed, with augmented data and eight weeks of training data the best result is obtained with a R2 value of 0.962 and considerably fewer training rounds compared to shorter periods of augmented training data.

Therefore, using the second and third dataset to predict a number of concurrent charging transactions leads to an accurate prediction.

**Figure 7** shows an exemplary system for implementing the claimed subject-matter including a general-purpose computing device in the form of a conventional computing environment 920 (e.g., a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and nonvolatile memory, such as a random-access memory (RAM) 928 and a read only memory (ROM) 930. A basic input/output system (BIOS) containing the basic routines that helps to transfer information between elements within the computing environment 920, such as during start-up, may be stored in the ROM 930. The system bus 926 may be any of several types of bus structures including a memory bus or memory controller, a peripheral bus, and a local bus using any of a variety of bus architectures.

The computing environment 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD-ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the computing environment 920. The data structures may include relevant data for the implementation of the method of figure 2. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946.

A user may enter commands and information, as discussed below, into the computing environment 920 through input devices such as keyboard 948 and mouse 950. Other input devices (not shown) may include a microphone (or other sensors), joystick, game pad, scanner, or the like. These and other input devices may be connected to the processing unit 922 through a universal serial bus (USB) interface 952 that is coupled to the system bus 926, or may be collected by other interfaces, such as a USB port interface 954, game port, a serial port or a parallel port. Further, information may be printed using printer 956. The printer 956, and other parallel input/output devices may be connected to the processing unit 922 through USB interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computing environment 920 may operate in a networked environment using connections to one or more electronic devices. Figure 7 depicts the computing environment 920 networked with remote computer 962. The remote computer 962 may be another computing environment such as a server, a router, a network PC, a peer device or other common network node, and may include many or all of the elements described above relative to the computing environment 920. The logical connections depicted in Figure 7 include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. In a networked environment, program modules depicted relative to the computing environment 920, or portions thereof, may be stored in a remote memory storage device resident on or accessible to remote computer 962. It will be appreciated that the network connections shown are exemplary and other means of establishing a communications link between the electronic devices may be used.

## Claims

1. A computer-implemented method comprising:

   - obtaining a first dataset comprising first charging transaction records relative to a plurality of charging transactions of first electric vehicles that have been charged at one or more charging stations of a charging infrastructure, wherein each first charging transaction record of the first dataset comprises:

     -- an initial state of charge of a battery of a respective first electric vehicle, the initial state of charge being recorded at the start of a respective charging transaction of the respective first electric vehicle, and
     -- a final state of charge of the battery of the respective first electric vehicle, the final state of charge being recorded at the end of the respective charging transaction of the respective first electric vehicle;

   - obtaining a second dataset comprising second charging transaction records relative to a plurality of charging transactions of second electric vehicles that have been charged at the one or more charging stations of the charging infrastructure, wherein each second charging transaction record of the second dataset comprises:

     -- an initial timestamp indicating the start of a respective charging transaction of a respective second electric vehicle,
     -- a final timestamp indicating the end of the respective charging transaction of the respective second electric vehicle, and
     -- a total energy provided to a battery of the respective second electric vehicle during the charging transaction;

   - using the first dataset and the second dataset to generate a third dataset relative to the plurality of charging transactions of the second electric vehicles, wherein, for each charging transaction of a respective second electric vehicle, the third dataset comprises at least one of:

-- an estimated used capacity of the battery of the respective second electric vehicle as a function of time for a time interval between the initial timestamp and the final timestamp, and
-- an estimated free capacity of the battery of the respective second electric vehicle as a function of time for a time interval between the initial timestamp and the final timestamp;

- using the second dataset and the third dataset to predict a number of electric vehicles charging at a given timepoint at the one or more charging stations of the charging infrastructure.

2. The computer-implemented method of claim 1, wherein using the first dataset and the second dataset to generate the third dataset comprises:
determining, for each charging transaction of the second electric vehicles, an estimated initial state of charge and an estimated final state of charge based on the initial states of charge and the final states of charge of the first charging transaction records.

3. The computer-implemented method of claim 2, wherein determining the estimated initial state of charge and the estimated final state of charge comprises:

- computing an average initial state of charge from the initial states of charge of the first charging transaction records;
- computing an average final state of charge from the final states of charge of the first charging transaction records;
- setting the estimated initial state of charge to the average initial state of charge;
- setting the estimated final state of charge to the average final state of charge.

4. The computer-implemented method of claim 2 or 3, wherein using the first dataset and the second dataset to generate the third dataset further comprises, for each charging transaction of the second electric vehicles:

- computing an estimated state of charge difference between the estimated final state of charge and the estimated initial state of charge;
- computing an estimated total capacity of the battery from the estimated state of charge difference and the total energy;
- computing an estimated initial used capacity of the battery at the initial timestamp from the estimated total capacity of the battery and the estimated initial state of charge;
- computing an estimated final used capacity of the battery at the final timestamp from the estimated total capacity of the battery and the estimated final state of charge.

5. The computer-implemented method of claim 4, wherein:

- computing the estimated total capacity of the battery comprises using the geometrical proportion (estimated state of charge difference) : (100%) = (total energy) : (estimated total capacity);
- computing the estimated initial used capacity of the battery comprises using the geometrical proportion (estimated initial state of charge) : (100%) = (estimated initial used capacity) : (estimated total capacity);
- computing the estimated final used capacity of the battery comprises using the geometrical proportion (estimated final state of charge) : (100%) = (estimated final used capacity) : (estimated total capacity).

6. The computer-implemented method of any one of the preceding claims, wherein using the first dataset and the second dataset to generate the third dataset comprises using a mathematical model defining the time dependence of the estimated used capacity of the battery.

7. The computer-implemented method of claim 6, wherein the mathematical model defines a linear time dependence.

8. The computer-implemented method of any one of the preceding claims, wherein using the second dataset and the third dataset to predict the number of electric vehicles comprises applying a machine-learning model.

9. The computer-implemented method of claim 8, wherein using the second dataset and the third dataset to predict the number of electric vehicles comprises:

- computing, from the second dataset, a past number of second electric vehicles charging at the one or more charging stations of the charging infrastructure as a function of time over a predetermined time interval;
- computing, from the third dataset, a cumulative estimated used capacity as a function of time over the predetermined time interval and/or a cumulative estimated free capacity as a function of time over the predetermined time interval;
- providing the past number and at least one of the cumulative estimated used capacity and the cumulative estimated free capacity as input data to the machine-learning model.

10. The computer-implemented method of any one of the preceding claims, the method further comprising:

- using the predicted number of electric vehicles to determine a threshold quantity of energy to be supplied to the charging infrastructure, and
- causing at least the threshold quantity of energy to be supplied to the charging infrastructure.

11. The computer-implemented method of any one of the preceding claims, the method further comprising:

- using the predicted number of electric vehicles to control a quantity of energy provided by each charging station of the charging infrastructure.

12. The computer-implemented method of claim 11, the method further comprising:

- detecting an actual number of electric vehicles charging at the one or more charging stations of the charging infrastructure at a later timepoint subsequent to the given timepoint;
- using a difference between the predicted number of electric vehicles and the actual number of electric vehicles to adjust the quantity of energy provided by each charging station of the charging infrastructure.

13. One or more non-transitory computer-readable media storing computerexecutable instructions that, when executed by a computing system, cause the computing system to perform the method of any one of claims 1 to 12.

14. A computing system comprising at least one processor configured to perform the method of any one of claims 1 to 12.

15. A system comprising:

the computing system of claim 14; and
a charging infrastructure comprising one or more charging stations, wherein the one or more charging stations are configured to charge electric vehicles;
wherein the computing system is configured to control a quantity of energy provided by and/or to the charging infrastructure during charging transactions of the electric vehicles.

**Amended claims in accordance with Rule 137(2) EPC.**

1. A computer-implemented method comprising:

- obtaining (210) a first dataset comprising first charging transaction records relative to a plurality of charging transactions of first electric vehicles that have been charged at one or more charging stations (110) of a charging infrastructure (100), wherein each first charging transaction record of the first dataset comprises:

-- an initial state of charge of a battery of a respective first electric vehicle, the initial state of charge being recorded at the start of a respective charging transaction of the respective first electric vehicle, and
-- a final state of charge of the battery of the respective first electric vehicle, the final state of charge being recorded at the end of the respective charging transaction of the respective first electric vehicle;

- obtaining (220) a second dataset comprising second charging transaction records relative to a plurality of charging transactions of second electric vehicles that have been charged at the one or more charging stations (110) of the charging infrastructure (100), wherein each second charging transaction record of the second dataset comprises:

-- an initial timestamp indicating the start of a respective charging transaction of a respective second electric vehicle,
-- a final timestamp indicating the end of the respective charging transaction of the respective second electric vehicle, and
-- a total energy provided to a battery of the respective second electric vehicle during the charging transaction;

- using (230) the first dataset and the second dataset to generate a third dataset relative to the plurality of charging transactions of the second electric vehicles, wherein, for each charging transaction of a respective second electric vehicle, the third dataset comprises at least one of:

-- an estimated used capacity of the battery of the respective second electric vehicle as a function of time for a time interval between the initial timestamp and the final timestamp, and
-- an estimated free capacity of the battery of the respective second electric vehicle as a function of time for a time interval between the initial timestamp and the final timestamp;

- using (240) the second dataset and the third dataset to predict a number of electric vehicles charging at a given timepoint at the one or more charging stations (110) of the charging infrastructure (100).

2. The computer-implemented method of claim 1, wherein using the first dataset and the second dataset to generate the third dataset comprises:

determining, for each charging transaction of the second electric vehicles, an estimated initial state of charge and an estimated final state of charge based on the initial states of charge and the final states of charge of the first charging transaction records.

3. The computer-implemented method of claim 2, wherein determining the estimated initial state of charge and the estimated final state of charge comprises:

- computing an average initial state of charge from the initial states of charge of the first charging transaction records;
- computing an average final state of charge from the final states of charge of the first charging transaction records;
- setting the estimated initial state of charge to the average initial state of charge;
- setting the estimated final state of charge to the average final state of charge.

4. The computer-implemented method of claim 2 or 3, wherein using the first dataset and the second dataset to generate the third dataset further comprises, for each charging transaction of the second electric vehicles:

- computing an estimated state of charge difference between the estimated final state of charge and the estimated initial state of charge;
- computing an estimated total capacity of the battery from the estimated state of charge difference and the total energy;
- computing an estimated initial used capacity of the battery at the initial timestamp from the estimated total capacity of the battery and the estimated initial state of charge;
- computing an estimated final used capacity of the battery at the final timestamp from the estimated total capacity of the battery and the estimated final state of charge.

5. The computer-implemented method of claim 4, wherein:

- computing the estimated total capacity of the battery comprises using the geometrical proportion (estimated state of charge difference) : (100%) = (total energy) : (estimated total capacity);
- computing the estimated initial used capacity of the battery comprises using the geometrical proportion (estimated initial state of charge) : (100%) = (estimated initial used capacity) : (estimated total capacity);
- computing the estimated final used capacity of the battery comprises using the geometrical proportion (estimated final state of charge) : (100%) = (estimated final used capacity) : (estimated total capacity).

6. The computer-implemented method of any one of the preceding claims, wherein using the first dataset and the second dataset to generate the third dataset comprises using a mathematical model defining the time dependence of the estimated used capacity of the battery.

7. The computer-implemented method of claim 6, wherein the mathematical model defines a linear time dependence.

8. The computer-implemented method of any one of the preceding claims, wherein using the second dataset and the third dataset to predict the number of electric vehicles comprises applying a machine-learning model.

9. The computer-implemented method of claim 8, wherein using the second dataset and the third dataset to predict the number of electric vehicles comprises:

   - computing, from the second dataset, a past number of second electric vehicles charging at the one or more charging stations (110) of the charging infrastructure (100) as a function of time over a predetermined time interval;
   - computing, from the third dataset, a cumulative estimated used capacity as a function of time over the predetermined time interval and/or a cumulative estimated free capacity as a function of time over the predetermined time interval;
   - providing the past number and at least one of the cumulative estimated used capacity and the cumulative estimated free capacity as input data to the machine-learning model.

10. The computer-implemented method of any one of the preceding claims, the method further comprising:

    - using the predicted number of electric vehicles to determine a threshold quantity of energy to be supplied to the charging infrastructure (100), and
    - causing at least the threshold quantity of energy to be supplied to the charging infrastructure (100).

11. The computer-implemented method of any one of the preceding claims, the method further comprising:

    - using the predicted number of electric vehicles to control a quantity of energy provided by each charging station (110) of the charging infrastructure (100).

12. The computer-implemented method of claim 11, the method further comprising:

    - detecting an actual number of electric vehicles charging at the one or more charging stations (110) of the charging infrastructure (100) at a later timepoint subsequent to the given timepoint;
    - using a difference between the predicted number of electric vehicles and the actual number of electric vehicles to adjust the quantity of energy provided by each charging station (110) of the charging infrastructure (100).

13. One or more non-transitory computer-readable media storing computer-executable instructions that, when executed by a computing system (330), cause the computing system (330) to perform the method of any one of claims 1 to 12.

14. A computing system (330) comprising at least one processor configured to perform the method of any one of claims 1 to 12.

15. A system comprising:

    the computing system (330) of claim 14; and
    a charging infrastructure (100) comprising one or more charging stations (110),
    wherein the one or more charging stations (110) are configured to charge electric vehicles;
    wherein the computing system (330) is configured to control a quantity of energy provided by and/or to the charging infrastructure (100) during charging transactions of the electric vehicles.

Figure 1

EP 4 737 196 A1

**210** — Obtaining first dataset comprising initial and final states of charge

**220** — Obtaining second dataset comprising initial and final timestamps, and total charging energy

**230** — Using first and second datasets to generate third dataset comprising estimated used and/or free capacity

**240** — Using second and third datasets to predict number of electric vehicles charging at charging infrastructure

**200**

Figure 2

Capacity in kWh

t in minutes

Vehicle connects to charging station

Vehicle disconnects from charging station

Charging stops at ⌀ 83,4% SoC

⌀ 16.5 min

Charging starts at ⌀ 41,3% SoC

⌀ 78.8 min

Figure 3

Figure 4

Figure 5

Figure 6

EP 4 737 196 A1

Figure 7

## EUROPEAN SEARCH REPORT

**Application Number**

EP 24 20 9698

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/291047 A1 (SAITO DAISUKE [US] ET AL) 15 October 2015 (2015-10-15) | 1-9,13, 14 | INV. B60L53/62 |
| Y | * paragraphs [0032], [0033], [0037], [0044], [0063] * | 10-12,15 | B60L53/66 B60L58/12 |
| | ----- | | |
| Y | US 2015/039391 A1 (HERSHKOVITZ BARAK [IL] ET AL) 5 February 2015 (2015-02-05) * paragraphs [0167] - [0177] * | 10-12,15 | |
| | ----- | | |

**TECHNICAL FIELDS SEARCHED (IPC)**

B60L

The present search report has been drawn up for all claims

| Place of search | Date of completion of the search | Examiner |
|---|---|---|
| The Hague | 15 April 2025 | Bellatalla, Filippo |

EPO FORM 1503 03.82 (P04C01)

## ANNEX TO THE EUROPEAN SEARCH REPORT
## ON EUROPEAN PATENT APPLICATION NO.

EP 24 20 9698

15-04-2025

| Patent document cited in search report | Publication date | Patent family member(s) | Publication date |
|---|---|---|---|
| US 2015291047 A1 | 15-10-2015 | NONE | |
| US 2015039391 A1 | 05-02-2015 | CN    103814394 A | 21-05-2014 |
|  |  | EP    2745261 A1 | 25-06-2014 |
|  |  | JP    6399928 B2 | 03-10-2018 |
|  |  | JP    2014524618 A | 22-09-2014 |
|  |  | KR    20140078623 A | 25-06-2014 |
|  |  | US    2015039391 A1 | 05-02-2015 |
|  |  | WO    2013024484 A1 | 21-02-2013 |

For more details about this annex : see Official Journal of the European Patent Office, No. 12/82